# EUROPÄISCHE PATENTSCHRIFT

(11) **EP 2 877 877 B1**
(45) Veröffentlichungstag und Bekanntmachung des Hinweises auf die Patenterteilung: **10.10.2018**
(21) Anmeldenummer: 13727865.1
(22) Anmeldetag: 05.06.2013
(51) Int. Cl.: G01S 7/52, G01S 15/87, G01S 15/93

(54) **VERFAHREN ZUM BETRIEB EINES UMFELDERFASSUNGSSYSTEMS EINES FAHRZEUGS UND UMFELDERFASSUNGSSYSTEM**
METHOD FOR OPERATING A SURROUNDINGS-SENSING SYSTEM OF A VEHICLE AND SURROUNDINGS-SENSING SYSTEM
PROCÉDÉ D'EXPLOITATION D'UN SYSTÈME D'ACQUISITION DE L'ENVIRONNEMENT D'UN VÉHICULE ET SYSTÈME D'ACQUISITION D'ENVIRONNEMENT

(30) Priorität: 24.07.2012 DE 102012212902
(43) Veröffentlichungstag der Anmeldung: 03.06.2015
(73) Patentinhaber: Robert Bosch GmbH, 70442 Stuttgart (DE)
(72) Erfinder: REICHE, Martin, 71263 Weil Der Stadt (DE)
(86) Internationale Anmeldenummer: PCT/EP2013/061526
(87) Internationale Veröffentlichungsnummer: WO 2014/016027

(56) Entgegenhaltungen:
- DE-A1-102010 033 384
- US-A1- 2010 080 083
- LUCIANO ALONSO ET AL: "Ultrasonic Sensors in Urban Traffic Driving-Aid Systems", SENSORS, MDPI, BASEL, CH, Bd. 11, 11. Januar 2011 (2011-01-11), Seiten 661-673, XP007922060, ISSN: 1424-8220, DOI: 10.3390/S110100661

## Beschreibung

### Stand der Technik

Die Erfindung betrifft ein Verfahren zum Betrieb eines Umfelderfassungssystems eines Fahrzeugs mit zumindest zwei Sende-/Empfangseinheiten, wobei die Sende-/Empfangseinheiten Wellenpulse aussenden und Echosignale der ausgesendeten Wellenpulse empfangen, welche von Reflexionsquellen reflektiert werden, die sich in einem Erfassungsbereich der Sende-/Empfangseinheiten befinden.

Gegenstand der Erfindung sind außerdem ein Umfelderfassungssystem eines Fahrzeugs und ein Computerprogramm, welche zur Ausführung des Verfahrens geeignet sind.

Derartige Umfelderfassungssysteme werden beispielsweise eingesetzt, um eine Distanz von einer Sende-/Empfangseinheit zu einem vor der Sende-/Empfangseinheit befindlichen Objekt zu vermessen. Die eingesetzten Systeme basieren in der Regel auf einem Pulsecho-Verfahren. In diesem Betrieb sendet die Sende-/Empfangseinheit einen Wellenpuls aus und misst die durch ein Objekt hervorgerufene Reflexion des Wellenpulses, nämlich den Empfangswellenpuls oder kurz den Echopeak.

DE 10 2009 045 429 A1 zeigt ein Verfahren zur Bestimmung des Ortes eines Objekts gegenüber einem Fahrzeug mit einer Mehrzahl von Sende-/Empfangseinheiten, wobei eine Pulslänge von Sendewellenpulsen, die während derselben Ortsbestimmungsperiode gesendet werden, für mindestens zwei der Sende-/Empfangseinheiten unterschiedlich ist. Ein Vergleicher nimmt Auftrittszeitpunkte und Signalstärken von Komponenten eines Empfangswellenpulses auf, welche derselben Ortsbestimmungsperiode zugeordnet sind und von verschiedenen Sende-/Empfangseinheiten stammen. Der Vergleicher ist dazu eingerichtet, die Schwellwerte, welche an den Vergleicher geleitet werden, gemäß der Signalstärke des aktuellen Empfangswellenpulses oder Komponenten hiervon mit steigender Signalstärke zu heben oder fallender Signalstärke zu senken. Neben der Pulslänge werden auf diese Weise Flanken erfasst und Flanken in gleicher Höhe zusammengepaart, um die Laufzeiten der unterschiedlich langen Wellenpulse festzustellen.

DE 10 2009 002 871 A1 zeigt ein Ultraschallobjekterfassungssystem für ein Fahrzeug, wobei die Art der Erfassung an eine Objektszenerie angepasst wird. Ultraschallimpulse unterschiedlicher Energie, beispielsweise durch Variation der Impulsdauer werden verwendet, um ein optimales Empfangssignal zu erhalten.

DE 10 2010 033 384 A1 zeigt ein Verfahren und eine Vorrichtung zur Auswertung eines Echosignals im Zusammenhang mit der Fahrzeugumfelderfassung. Bei dem Verfahren werden empfangene Echosignale, die Nutzsignalanteile und Störsignalanteile umfassen können, sowohl nach der Amplitude als auch nach der Korrelation mit dem ausgesendeten Messsignal bewertet. Zur Unterscheidung der verschiedenen Signalanteile des Echosignals wird mindestens ein Schwellenwert für die bewertete Amplitude und/oder die bewertete Korrelation vorgegeben. Dabei kann ein Signalanteil des empfangenen Echosignals dann als relevant eingestuft werden, wenn die bewertete Amplitude und die bewertete Korrelation der Signalanteile des empfangenen Echosignals jeweils einen bestimmten vorgegebenen Schwellwert erreicht bzw. überschreiten. Dabei wird vorgeschlagen zumindest für den Schwellwert der Amplitude einen zeitabhängigen Schwellwert zu verwenden, da mit größeren Abständen zum Fahrzeug generell mit geringeren Amplituden der Nutzsignalanteile zu rechnen ist.

US 2010/080083 A1 beschreibt eine zeitabhängige Verstärkungsregelung für einen Verstärker, der zum Empfang von Echos eingerichtet ist. Dabei wird der Verstärkungsfaktor zeitabhängig so geregelt, dass alle empfangenen Echos in etwa die gleiche Amplitude aufweisen.

Die Veröffentlichung von Luciano Alonso et al.: "Ultrasonic Sensors in Urban Traffic Driving-Aid Systems", SENSORS MDPI, BASEL, CH, Bd. 11 vom 11. Januar 2011 befasst sich mit Ultraschallsensoren im Zusammenhang mit Adaptive Cruise Control (ACC).

### Offenbarung der Erfindung

### Vorteile der Erfindung

Bei dem erfindungsgemäßen Verfahren zum Betrieb eines Umfelderfassungssystems eines Fahrzeugs mit zumindest zwei Sende-/Empfangseinheiten, wobei die Sende-/Empfangseinheiten Wellenpulse aussenden und Echosignale der ausgesendeten Wellenpulse empfangen, welche von Reflexionsquellen reflektiert werden, die sich in einem Erfassungsbereich der Sende-/Empfangseinheiten befinden, wobei aus den empfangenen Echosignalen Empfangswellenpulse ermittelt werden und zu einem Empfangswellenpuls ein ausgesendeter Wellenpuls ermittelt wird, welcher dem Empfangswellenpuls entspricht, wobei zur Kodierung unterscheidbarer Wellenpulse die Wellenpulse paarweise verschiedener Sende-/Empfangseinheiten paarweise verschiedene Pulslängen aufweisen, ist vorgesehen, dass die empfangenen Echosignale nichtkohärent demoduliert werden und zu einem Empfangswellenpuls ein Pulsscheitel ermittelt wird und eine Pulslänge des Empfangswellenpuls auf den Pulsscheitel normiert wird.

Die Erfindung ermöglicht vorteilhaft eine effektive Pulskodierung mehrerer Sende-/Empfangseinheiten über die Sendepulslänge. Zwei paarweise verschiedene Sendepulslängen können beispielsweise um einen Faktor 1,5 verschieden sein. Beispielsweise sendet eine erste Sende-/Empfangseinheit einen ersten Sendepuls mit einer Sendepulslänge von 200 µs und eine zweite Sende-/Empfangseinheit einen zweiten Sendepuls mit einer Sendepulslänge von 300 µs. Der Unterscheidungsfaktor kann beispielsweise zwischen 1 und 5, bevorzugt zwischen 1 und 3, besonders bevorzugt zwischen 1 und 2 liegen. Bei drei gleichzeitig sendenden Sende-/Empfangseinheiten bedeuten drei paarweise verschiedene Pulslängen drei verschiedene Sendepulslängen, beispielsweise 200 µs, 250 µs und 300 µs, wobei der Unterscheidungsfaktor zwischen der ersten Sendepulslänge und der zweiten Sendepulslänge nicht gleich dem Unterscheidungsfaktor der zweiten Pulslänge und der dritten Pulslänge sein muss, sondern hiervon verschieden sein kann. Ein weiterer Vorteil ist, dass die Bestimmung der Empfangspulsbreite nichtkohärent, das heißt ohne Trägerbezug realisierbar ist.

Erfindungsgemäß wird ein Ausschnitt aus dem Empfangswellenpuls ermittelt, indem der Empfangswellenpuls um den Pulsscheitel bei einem Abfall der Signalamplitude um einen definierten Wert, beispielsweise um 30% bis 70%, insbesondere um 50% abgeschnitten wird. Die Pulslänge wird dabei durch die Größe des Ausschnitts definiert.

Alternativ hierzu oder zusätzlich hierzu ist eine Diskriminierung der Wellenpulse über eine Pulsfläche vorgesehen. Dabei wird zu dem Empfangswellenpuls ein Pulsflächeninhalt ermittelt und die Pulslänge durch einen Quotienten aus dem Pulsflächeninhalt und dem Pulsscheitel ermittelt.

Alternativ hierzu oder zusätzlich hierzu ist eine Diskriminierung der Wellenpulse über eine Pulsenergie vorgesehen. Dabei wird zu dem Empfangswellenpuls eine Pulsenergie ermittelt und die Pulslänge durch einen Quotienten aus der Pulsenergie und dem Quadrat des Pulsscheitels ermittelt. Hierdurch kann jeweils eine Zuordnung der Empfangswellenpulse zu den ausgesendeten Wellenpulsen der Sende-/Empfangseinheiten erfolgen.

Nach einer Ausführungsform werden die empfangenen Echosignale einer Hilbert-Transformation unterworfen. Die Hilbert-Transformation erzeugt eine Einhüllende mit einem trägerfreien analytischen Signal, welches nicht durch Dopplereffekte korrumpiert ist.

Alternativ hierzu ist vorgesehen, dass die empfangenen Echosignale einen Gleichrichter und einen anschließenden Tiefpass durchlaufen. Dies stellt eine besonders kostengünstige Variante zur Erzeugung des trägerfreien analytischen Signals dar.

Bevorzugt werden für die von den zumindest zwei Sende-/Empfangseinheiten empfangenen Signale Signallaufzeiten ermittelt und unter Verwendung der ermittelten Signallaufzeiten Abstände der Sende-/Empfangseinheiten zu den Reflexionsquellen ermittelt. Der Abstand zwischen dem Sensor und dem Objekt errechnet sich über die gemessene Echolaufzeit und die Schallgeschwindigkeit. Neben dem Abstand kann auch die Winkelinformation über die Objekte ermittelt werden, so dass das Objekt im Raum lokalisiert werden kann. Um die Winkelinformation zu extrahieren, können beispielsweise mehrere Sende-/Empfangseinheiten zu einem System kombiniert und die Laufzeitunterschiede des reflektierten Signals zu den Sensoren genutzt werden. Dieser Vorgang wird auch als Trilateration bezeichnet.

Zusätzlich kann eine weitere Kodierung der Wellenpulse erfolgen, beispielsweise durch Modulation der Frequenz und/oder der Phase und/oder durch verschiedene Frequenzhöhen, was weitere Unterscheidungsmerkmale der Sendepulse erlaubt.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, welche auf einem Smartphone ausführbar ist. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung wie etwa auf einem Server zum Herunterladen bereitgestellt werden, z.B. über ein Datennetzwerk wie das Internet oder eine Kommunikationsverbindung wie etwa eine Telefonleitung oder eine drahtlose Verbindung.

Nach einem weiteren Aspekt der Erfindung umfasst ein Umfelderfassungssystem eines Fahrzeugs zumindest zwei Sende-/Empfangseinheiten, die eingerichtet sind, Wellenpulse auszusenden und Echosignale der ausgesendeten Wellenpulse zu empfangen, welche von Reflexionsquellen reflektiert werden, die sich in einem Erfassungsbereich der Sende-/Empfangseinheiten befinden, wobei zur Kodierung unterscheidbarer Wellenpulse die Wellenpulse paarweise verschiedener Sende-/Empfangseinheiten paarweise verschiedene Pulslängen aufweisen, zumindest einen Demodulator, welcher eingerichtet ist, die empfangenen Echosignale nichtkohärent zu demodulieren, und zumindest eine Auswerteeinheit, welche eingerichtet ist, zu einem Empfangswellenpuls einen Pulsscheitel zu ermitteln und eine Pulslänge des Empfangswellenpulses auf den Pulsscheitel zu normieren.

Die Sende-/Empfangseinheiten können beispielsweise eine Gruppe von Sende-/Empfangseinheiten sein, welche gemeinsam eine Teilumgebung des Fahrzeugs erfassen. Beispielsweise kann eine Gruppe von Sende-/Empfangseinheiten im Frontbereich zur Erfassung einer vorderseitigen Fahrzeugumgebung angeordnet sein und/oder im Seitenbereich zur Erfassung eines Seitenbereichs des Fahrzeugs und/oder im Heckbereich zur Erfassung einer rückwärtigen Umgebung des Fahrzeugs.

Bevorzugt sind die Sende-/Empfangseinheiten Ultraschall-Sende-/Empfangseinheiten. Dabei können beispielsweise vier bis sechs Sende-/Empfangseinheiten in einem Stoßfänger verbaut werden, wobei üblicherweise nur maximal vier Sende-/Empfangseinheiten mit ungefähr derselben Blickrichtung montiert sind. Insbesondere, um auch den Bereich neben dem Kraftfahrzeug zu erfassen, werden im vorderen Stoßfänger außerdem Sende-/Empfangseinheiten positioniert, die nach links und nach rechts ihren Erfassungsbereich haben. Zusätzlich oder Alternativ können auch im hinteren Stoßfänger Sende-/Empfangseinheiten derart positioniert sein, dass diese einen Bereich links und rechts neben dem Kraftfahrzeug erfassen.

Um die Sende-/Empfangseinheiten in Verbünden, sogenannten Clustern zu betreiben, können diese seriell angesteuert sein. Bei der seriellen Ansteuerung sendet während jeder Ortsbestimmungsperiode jede Sende-/Empfangseinheit genau einen Sendewellenpuls, wobei bis zum Senden der folgenden Sende-/Empfangseinheit eine Mindestwartedauer eingehalten werden muss, welche sich nach einer Echoberuhigungszeit richten kann und gegebenenfalls ein Schutzintervall umfassen kann, um eine Störung der Sendeelemente untereinander zu vermeiden. Im Falle von Ultraschall-Sende-/Empfangseinheiten ergibt sich eine Messzeit eines Einzelsensors von ca. 30 ms. Bei vier bis sechs Ultraschall-Sende-/Empfangseinheiten ergibt sich demnach ein Clusterzyklus von 120-180 ms. Diese Zeit ist bestimmend für die Latenz bzw. Reaktionszeit des Gesamtsystems und wird auch als Systemupdatezeit bezeichnet.

Besonders bevorzugt wird das Verfahren bei gleichzeitig sendenden Sende-/Empfangseinheiten angewendet. Zur Kodierung paarweise unterscheidbarer Sendepulse paarweise verschiedener, gleichzeitig sendendender Sende-/Empfangseinheiten wird dabei die Sendepulslänge verwendet. Dabei kann vorgesehen sein, dass jeweils zwei Sende-/Empfangseinheiten gleichzeitig senden, daraufhin zwei weitere, daraufhin gegebenenfalls noch zwei weitere Sende-/Empfangseinheiten und so weiter. Alternativ dazu kann vorgesehen sein, dass jeweils eine Hälfte der Sende-/Empfangseinheiten, beispielsweise jeweils drei Sende-/Empfangseinheiten gleichzeitig senden und hiernach die andere Hälfte der Sende-/Empfangseinheiten. Bevorzugt ist vorgesehen, dass während einer Ortsbestimmungsperiode alle Sende-/Empfangseinheiten gleichzeitig senden.

### Kurze Beschreibung der Zeichnungen

Weitere Vorteile der Erfindung werden aus der nachfolgenden Figurenbeschreibung ersichtlich.

Es zeigen
- Figur 1: eine schematische Darstellung eines Umfelderfassungssystems eines Fahrzeugs,
- Figur 2: zwei verschiedene Wellenpulse, die während einer Ortsbestimmungsperiode gesendet bzw. empfangen werden und
- Figur 3: ein Szenario mit einem Fahrzeug und einem Hindernis.

### Ausführungsformen der Erfindung

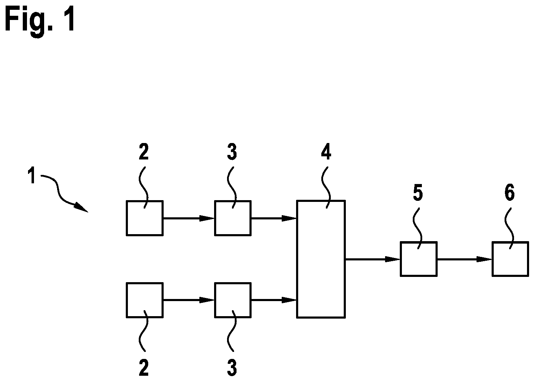

Figur 1 zeigt ein Umfelderfassungssystem 1 eines Fahrzeugs mit hier beispielhaft zwei dargestellten Sende-/Empfangseinheiten 2, beispielsweise Ultraschallsensoren, welche eingerichtet sind, frequenzmodulierte Signale auszusenden und zu empfangen. Die Sende-/Empfangseinheiten 2 können parallel oder seriell betrieben sein.

Die Sende-/Empfangseinheiten 2 sind an Filtervorrichtungen 3 gekoppelt. Die empfangenen Echosignale weisen im Allgemeinen Nutzsignalanteile und Störsignalanteile auf und durchlaufen jeweils Filtervorrichtungen 3, insbesondere um die Nutzsignalanteile aus den Echosignalen zu bestimmen. Die empfangenen Signale werden in der Filtervorrichtung 3 aufgearbeitet, beispielsweise verstärkt, digitalisiert, gesampelt, durch Tief-, Hoch oder Bandpässe gefiltert und/oder von Störsignalen befreit. Bevorzugt werden die Echosignale außerdem einer Hilbert-Transformation unterworfen. In einem Demodulator 4 werden die Signale nichtkohärent demoduliert. Anstelle des dargestellten einen Demodulators 4 für mehrere Sende-/Empfangseinheiten 2 kann auch für jede Sende-/Empfangseinheit 2 ein einzelner Demodulator 4 vorgesehen sein. Nach Durchlaufen der Filtervorrichtungen 3 und des Demodulators 4 wird ein empfangenes Echosignal auch als ein verarbeitetes empfangenes Signal bezeichnet.

Die verarbeiteten empfangenen Signale werden hiernach beispielsweise computerimplementierten Auswerteeinheiten 5 zugeführt, welche unter Berücksichtigung der empfangenen Echosignale Abstände der jeweiligen Sende-/Empfangseinheiten 2 zu im Erfassungsbereich befindlichen Reflexionsquellen ermitteln. Anstelle der dargestellten einen Auswerteeinheit 5 für mehrere Sende-/Empfangseinheiten 2 kann auch für jede Sende-/Empfangseinheit 2 eine einzelne Auswerteeinheit vorgesehen sein, welche die verarbeiteten empfangenen Signale weiterverarbeitet. In der Auswerteeinheit 5 werden außerdem Pulsflächen der Empfangswellenpulse ermittelt, sowie Lagen und Anzahl von Pulsscheiteln, Höhen der Pulsscheitel und/oder Formen der Pulse. Die Pulsfläche eines Empfangswellenpulses kann vor oder nach der Digitalisierung des Signals durch Integration des Echosignals über die Zeit ermittelt werden. Die Pulsenergie eines Empfangswellenpulses kann vor oder nach der Digitalisierung des Signals durch Integration des quadrierten Echosignals über die Zeit ermittelt werden.

Die Auswerteeinheit 5 stellt Signale und/oder Daten für weitere Steuergeräte 6 von Fahrassistenzsystemen bereit, beispielsweise für Parkassistenten, *back over avoidance-*Systeme, *adaptive cruise control*-Systeme (ACC-Systems), Totwinkeldetektiersysteme (*blind spot detection*-Systems, BSD-Systems) und/oder Systeme zur Unfallverhinderung oder zur Unfallschadensverminderung.

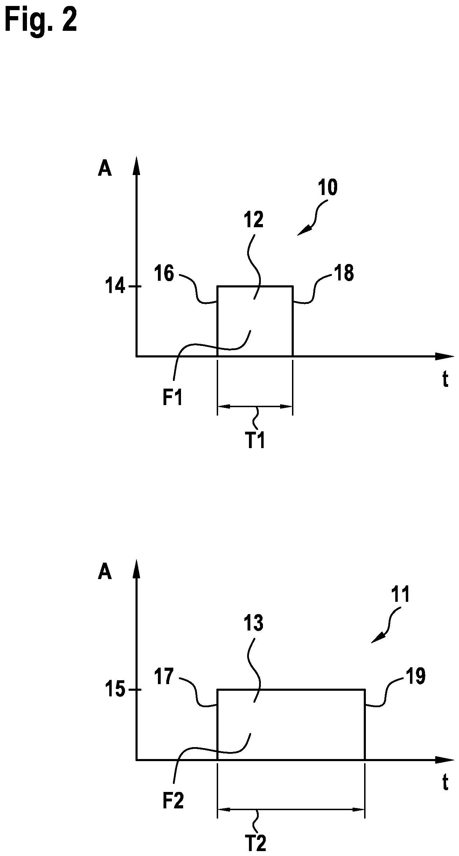

Figur 2 zeigt in einem Amplitude-über-Zeit-Diagramm beispielhaft zwei Signalverläufe 10, 11 von Wellenpulsen, die während einer Ortsbestimmungsperiode von verschiedenen Sende-/Empfangseinheiten gesendet bzw. empfangen werden. Ein erster Signalverlauf 10 kann beispielsweise der mit Bezug zu Figur 1 beschriebenen ersten Sende-/Empfangseinheit 2 zugeordnet sein und ein zweiter Signalverlauf 11 kann der zweiten Sende-/Empfangseinheit 2 zugeordnet sein.

Der erste Signalverlauf umfasst einen ersten Wellenpuls 12, welcher eine Startflanke 16, eine Endflanke 18 und eine Pulshöhe 14 aufweist. Die zeitliche Differenz zwischen dem Auftreten der Startflanke 16 und der Endflanke 18 wird im Rahmen dieses Ausführungsbeispiels als eine erste Sendepulslänge T1 bezeichnet. Der erste Wellenpuls 12 weist einen ersten Pulsflächeninhalt F₁ auf. Der zweite Sendepuls 13 weist ebenfalls eine Startflanke 17, eine Endflanke 19 und eine Pulshöhe 15 auf. Der zweite Wellenpuls 11 weist einen zweiten Pulsflächeninhalt F₂ auf. Die zeitliche Differenz zwischen dem Auftreten der Startflanke 17 und der Endflanke 19 definiert eine zweite Sendepulslänge T2. Zwischen der ersten Sendepulslänge T1 und der zweiten Sendepulslänge T2 steht im dargestellten Ausführungsbeispiel ein Faktor 2, welcher aufgrund der gleichen Signalhöhe auch zwischen den Flächeninhalten F₁ und F₂ steht.

Ein tatsächlich empfangener Empfangswellenpuls unterscheidet sich von den dargestellten idealisierten Empfangswellenpulsen 12, 13. Durch Übertragungs- und Reflexionsprozesse überlagern sich die Wellenpulse nicht nur, sondern werden durch Dopplereffekte und Übertragungscharakteristika des Übertragungskanals verzerrt, wobei die Verzerrungen durch geeignete Filter zum Teil abgefangen werden können.

Um anhand der Sendepulslänge T1, T2 den ausgesendeten Wellenpuls zu ermitteln, welcher den jeweiligen Empfangswellenpuls 12, 13 ergibt, wird der Pulsscheitel 14, 15 des Empfangswellenpulses 12, 13 ermittelt und ein Signalabschnitt erzeugt, welcher an dem Zeitpunkt, hier an der Startflanke 16, 17 beginnt, bei welchem die Signalamplitude einem definierten Wert, beispielsweise 30% bis 70%, insbesondere 50% der Höhe des Pulsscheitels 14, 15 entspricht und welcher an dem Zeitpunkt, hier an der Endflanke 18, 19 endet, bei welchem die Signalamplitude einem weiteren, nicht notwendigerweise gleichen definierten Wert, beispielsweise 30% bis 70%, insbesondere 50% der Höhe des Pulsscheitels 14, 15 entspricht. Die Pulslänge wird dabei durch die Größe des Ausschnitts, hier T1, T2 definiert.

Da durch die Signalverzerrung eine klare Detektion der Flanken 16, 17, 18, 19 nicht immer möglich ist, kann der Pulsflächeninhalt oder die Pulsenergie des Empfangswellenpulses 12, 13 die entscheidende Größe sein, um anhand der Sendepulslänge den ausgesendeten Wellenpulsen zu ermitteln, welcher den jeweiligen Empfangswellenpuls 12, 13 ergibt. Der Pulsscheitel 14, 15 wird zur Normierung des Pulsflächeninhalts oder zur Normierung der Pulsenergie genutzt. Die Pulslänge wird dabei durch einen Quotienten aus dem Pulsflächeninhalt und dem Pulsscheitel, bzw. durch einen Quotienten aus der Pulsenergie und dem Quadrat des Pulsscheitels ermittelt.

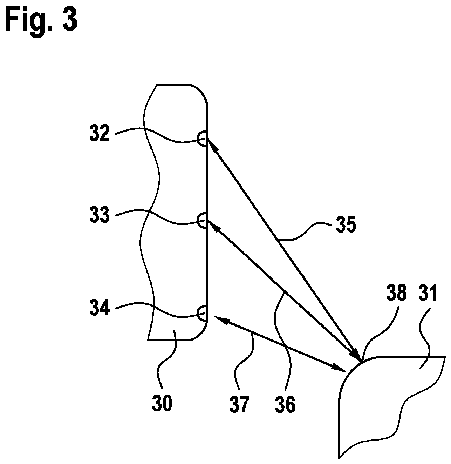

Figur 3 zeigt ein Szenario mit einem Fahrzeug 30 und einem Hindernis 31. Eine erste primäre Ausbreitungsstrecke ergibt sich zwischen der Sende-/Empfangseinheit 32 und der Reflexionsquelle 38 als Wegstrecke 35, eine zweite Wegstrecke 36 ergibt sich zwischen der Sende-/Empfangseinheit 33 und dem Reflexionsquelle 38, und eine dritte Wegstrecke 37 ergibt sich zwischen der Sende-/Empfangseinheit 34 und der Reflexionsquelle 38 als Wegstrecke 37. Die Sende-/Empfangseinheiten 32 - 34 senden Sende-Wellenpulse verschiedener Pulslänge aus, die an der Reflexionsquelle 38 reflektiert werden und in überlagerter Form an den einzelnen Sende-/Empfangseinheiten 32 - 34 wieder empfangen werden. Je nach Länge der Wegstrecke 35- 37 bzw. deren Längenverhältnisse zueinander ergeben sich unterschiedliche Verzögerungen für die ausgesendeten Wellenpulse, welche in den Empfangswellenpulsen voneinander zu trennen sind. In der in Figur 3 vorgesehenen Situation kann das Hindernis 31 durch Vergleich der unterschiedlichen Verzögerungen der einzelnen Wellenpulse oder durch Laufzeitmessungen ermittelt werden, die sich an den einzelnen Sende-/Empfangseinheiten 32 - 34 ergeben. Darüber hinaus kann unmittelbar der Winkel bestimmt werden, in dem das Hindernis 31 relativ zu der Sende-/Empfangseinheit angeordnet ist. Hierzu kann eine Doppelbestimmung (oder Mehrfachbestimmung) des Winkels (oder der Entfernung oder des Orts) zur Triangulation verwendet werden, indem beispielsweise der Empfangs-Wellenpuls der Sende-/Empfangseinheit 32 mit dem der Sende-/Empfangseinheit 34 verglichen wird, und ein erster Winkel erzeugt wird und wobei in einer weiteren Erfassung beispielsweise in analoger Weise ein zweiter Winkel durch die Sende-/Empfangseinheiten 33 und 34 bestimmt wird.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Umfelderfassungssystems (1) eines Fahrzeugs (30) mit zumindest zwei Sende-/Empfangseinheiten (2, 32, 33, 34), wobei die Sende-/Empfangseinheiten (2, 32, 33, 34) Wellenpulse (12, 13) aussenden und Echosignale der ausgesendeten Wellenpulse (12, 13) empfangen, welche von Reflexionsquellen (38) reflektiert werden, die sich in einem Erfassungsbereich der Sende-/Empfangseinheiten (2, 32, 33, 34) befinden, wobei aus den empfangenen Echosignalen Empfangswellenpulse (12, 13) ermittelt werden und zu einem Empfangswellenpuls (12, 13) ein ausgesendeter Wellenpuls (12, 13) ermittelt wird, welcher dem Empfangswellenpuls (12, 13) entspricht,
wobei zur Kodierung unterscheidbarer Wellenpulse die Wellenpulse (12, 13) paarweise verschiedener Sende-/Empfangseinheiten (2, 32, 33, 34) paarweise verschiedene Pulslängen (T1, T2) aufweisen, **dadurch gekennzeichnet, dass** die empfangenen Echosignale nichtkohärent demoduliert werden und eine Pulslänge (T1, T2) zu einem Empfangswellenpuls (12,13) bestimmt wird durch
Ermitteln eines Pulsscheitels (14, 15) des Empfangswellenpulses (12, 13) und
a) Erzeugen eines Signalabschnitts des Empfangswellenpulses (12, 13), welcher an einem Zeitpunkt beginnt, an dem die Signalamplitude des
Empfangswellenpulses (12, 13) 30% bis 70%, insbesondere 50% der Höhe des Pulsscheitels (14, 15) entspricht und welcher an einem zweiten Zeitpunkt (18, 19) endet, bei welchem die Signalamplitude des Empfangswellenpulses (12, 13) 30% bis 70%, insbesondere 50% der Höhe des Pulsscheitels (14, 15) entspricht, wobei die Pulslänge (T1, T2) durch die Größe des Signalabschnitts gegeben ist, oder
b) Bestimmen des Pulsflächeninhalts (F₁, F₂), wobei die Pulslänge (T1, T2) durch einen Quotienten aus dem Pulsflächeninhalt (F₁, F₂) und dem Pulsscheitel (14, 15) gegeben ist, oder
c) Bestimmen der Pulsenergie, wobei die Pulslänge (T1, T2) durch einen Quotienten aus der Pulsenergie und dem Quadrat des Pulsscheitels (14, 15) gegeben ist.

2. Verfahren nach dem vorhergehenden Anspruch, **dadurch gekennzeichnet, dass** die Echosignale einer Hilbert-Transformation unterworfen werden.

3. Verfahren nach einem der vorhergehenden Ansprüche, **dadurch gekennzeichnet, dass** die Echosignale einen Gleichrichter und einen Tiefpass durchlaufen.

4. Verfahren nach einem der vorhergehenden Ansprüche, **dadurch gekennzeichnet, dass** für die von den Sende-/Empfangseinheiten (2, 32, 33, 34) empfangenen Empfangswellenpulse (12, 13) Signallaufzeiten ermittelt werden und unter Berücksichtigung der ermittelten Signallaufzeiten Abstände der Sende-/Empfangseinheiten (2, 32, 33, 34) zu den Reflexionsquellen (38) ermittelt werden.

5. Computerprogramm, welches eines der Verfahren nach einem der Ansprüche 1 bis 4 ausführt, wenn das Computerprogramm auf einer programmierbaren Computereinrichtung ausgeführt wird.

## Claims

1. Method of operating a surroundings sensing system (1) of a vehicle (30) having at least two transmission/reception units (2, 32, 33, 34), wherein the transmission/reception units (2, 32, 33, 34) transmit wave pulses (12, 13) and receive echo signals of the transmitted wave pulses (12, 13) that are reflected by reflection sources (38) situated in a sensing area of the transmission/reception units (2, 32, 33, 34), wherein received wave pulses (12, 13) are ascertained from the received echo signals, and for one received wave pulse (12, 13) a transmitted wave pulse (12, 13) is ascertained that is consistent with the received wave pulse (12, 13), wherein for the purpose of coding distinguishable wave pulses the wave pulses (12, 13) of transmission/reception units (2, 32, 33, 34) differing in pairs have pulse lengths (T1, T2) differing in pairs, **characterized in that** the received echo signals are demodulated non-coherently and a pulse length (T1, T2) is determined for a received wave pulse (12, 13) by ascertaining a pulse crest (14, 15) of the received wave pulse (12, 13) and
a) generating a signal section of the received wave pulse (12, 13), which begins at a time at which the signal amplitude of the received wave pulse (12, 13) is consistent with 30% to 70%, in particular 50%, of the height of the pulse crest (14, 15) and which ends at a second time (18, 19), at which the signal amplitude of the received wave pulse (12, 13) is consistent with 30% to 70%, in particular 50%, of the height of the pulse crest (14, 15), wherein the pulse length (T1, T2) is provided by the magnitude of the signal section, or
b) determining the pulse area content (F₁, F₂), wherein the pulse length (T1, T2) is provided by a quotient of the pulse area content (F₁, F₂) and the pulse crest (14, 15), or
c) determining the pulse energy, wherein the pulse length (T1, T2) is provided by a quotient of the pulse energy and the square of the pulse crest (14, 15).

2. Method according to the preceding claim, **characterized in that** the echo signals are subjected to a Hilbert transformation.

3. Method according to either of the preceding claims, **characterized in that** the echo signals pass through a rectifier and a low-pass filter.

4. Method according to one of the preceding claims, **characterized in that** signal propagation times are ascertained for the received wave pulses (12, 13) received by the transmission/reception units (2, 32, 33, 34), and the ascertained signal propagation times are taken into consideration for ascertaining distances of the transmission/reception units (2, 32, 33, 34) from the reflection sources (38).

5. Computer program that carries out one of the methods according to one of Claims 1 to 4 when the computer program is executed on a programmable computer device.

## Revendications

1. Procédé de mise en oeuvre d'un système de détection d'environnement (1) d'un véhicule (30) comportant au moins deux unités d'émission/réception (2, 32, 33, 34), dans lequel les unités d'émission/réception (2, 32, 33, 34) émettent des impulsions d'ondes (12, 13) et reçoivent des signaux d'écho des impulsions d'ondes (12, 13) émises, qui sont réfléchies par des sources de réflexion (38) situées dans une zone de détection des unités d'émission/réception (2, 32, 33, 34), dans lequel des impulsions d'ondes de réception (12, 13) sont déterminées à partir des signaux d'écho reçus et, pour une impulsion d'onde de réception (12, 13), une impulsion d'onde émise (12, 13) correspondant à l'impulsion d'onde de réception (12, 13) est déterminée,
dans lequel, pour coder des impulsions d'ondes distinctes, les impulsions d'ondes (12, 13) présentent des longueurs d'impulsions différentes (T1, T2) par paires d'unités d'émission/réception différentes (2, 32, 33, 34), **caractérisé en ce que** les signaux d'écho reçus sont démodulés de manière non cohérente et **en ce qu'**une longueur d'impulsion (T1, T2) est déterminée pour une impulsion d'onde de réception (12, 13) par détermination d'un pic d'impulsion (14, 15) de l'impulsion d'onde de réception (12, 13), et
a) génération d'une section de signal de l'impulsion d'onde de réception (12, 13) qui commence à un moment où l'amplitude de signal de l'impulsion d'onde de réception (12, 13) correspond à 30% à 70%, en particulier 50% de la hauteur du pic d'impulsion (14, 15) et qui se termine à un second moment (18, 19) où l'amplitude de signal de l'impulsion d'onde de réception (12, 13) correspond à 30% à 70%, en particulier 50% de la hauteur du pic d'impulsion (14, 15), dans lequel la longueur d'impulsion (T1, T2) est donnée par la taille de la section de signal, ou
b) détermination de l'aire d'impulsion (F₁, F₂), dans lequel la longueur d'impulsion (T1, T2) est donnée par un quotient entre l'aire d'impulsion (F₁, F₂) et le pic de l'impulsion (14, 15), ou
c) détermination de l'énergie d'impulsion, dans lequel la longueur d'impulsion (T1, T2) est donnée par un quotient entre l'énergie d'impulsion et le carré du pic d'impulsion (14, 15).

2. Procédé selon la revendication précédente, **caractérisé en ce que** les signaux d'écho sont soumis à une transformation de Hilbert.

3. Procédé selon l'une des revendications précédentes, **caractérisé en ce que** les signaux d'écho passent à travers un redresseur et un filtre passe-bas.

4. Procédé selon l'une des revendications précédentes, **caractérisé en ce que** des temps de propagation des signaux sont déterminés pour les impulsions d'ondes de réception (12, 13) reçues par les unités d'émission/réception (2, 32, 33, 34) et **en ce que** des distances des unités d'émission/réception (2, 32, 33, 34) par rapport aux sources de réflexion (38) sont déterminées en tenant compte des temps de propagation déterminés des signaux.

5. Programme d'ordinateur qui met en oeuvre l'un des procédés selon l'une des revendications 1 à 4 lorsque le programme d'ordinateur est exécuté sur un dispositif informatique programmable.
